# EUROPÄISCHE PATENTANMELDUNG

(11) **EP 1 028 017 A2**
(43) Veröffentlichungstag der Anmeldung: **16.08.2000**
(21) Anmeldenummer: 00101552.8
(22) Anmeldetag: 27.01.2000
(51) Int. Cl.: B60K 15/03

(54) **Kraftstoffbehälter**

(30) Priorität: 10.02.1999 DE 19905359
(71) Anmelder: Mannesmann VDO Aktiengesellschaft, 60388 Frankfurt am Main (DE)
(72) Erfinder: Distelhoff, Markus, Dr., 60594 Frankfurt (DE); Klöker, Justus, Dr., 61267 Neu-Anspach (DE); Sinz, Wolfgang, Dr., 65843 Sulzbach (DE); Eck, Karl, 60318 Frankfurt (DE); Meyer, Knut, Dr., 45239 Essen (DE); Fröhlich, Winfried, 65520 Bad Camberg (DE); Mohr, Ingo, 56462 Höhn (DE); Keller, Dieter, 63743 Aschaffenburg (DE); Rumpf, Bernd, 61130 Nidderau-Windecken (DE)
(74) Vertreter: Klein, Thomas, Dipl.-Ing.

(57) **Zusammenfassung**

Ein Kraftstoffbehälter für ein Kraftfahrzeug hat ein Volumenausgleichsteil (4) zur Trennung von Luft aus der Umgebung und Kraftstoff. In der Wandung (1) ist ein Filterelement (7) zum Zurückhalten von durch das Volumenausgleichsteil (4) diffundierten Kraftstoffdämpfen angeordnet. Der Kraftstoffbehälter benötigt keine aufwendige Entlüftungseinrichtung und läßt sich daher besonders kostengünstig herstellen. Weiterhin wird ein Entweichen von Kraftstoffdämpfen aus dem Kraftstoffbehälter nahezu vollständig vermieden.

## Beschreibung

Die Erfindung betrifft einen Kraftstoffbehälter mit einer Wandung zur Begrenzung seines Kraftstoffinhalts.

Solche Kraftstoffbehälter werden beispielsweise in heutigen Personenkraftfahrzeugen oder in Nutzfahrzeugen eingesetzt und sind damit bekannt. Die Wandung ist wahlweise aus Kunststoff oder Metall gefertigt. Ein an der Oberseite des Kraftstoffbehälters angeordneter Einfüllstutzen ist in der Regel mit einem Filterelement und mit einer Entlüftungseinrichtung verbunden. Die Entlüftungseinrichtung ermöglicht ein Nachströmen von Luft in den Kraftstoffbehälter bei einer Entnahme von Kraftstoff. Das Filterelement verhindert einen beispielsweise durch Erwärmung hervorgerufenen Überdruck im Kraftstoffbehälter und daß bei einer Ausdehnung des Kraftstoffs Kraftstoffdämpfe in die Umgebung gelangen.

Nachteilig bei dem bekannten Kraftstoffbehälter ist, daß er durch die Entlüftungseinrichtung und das Filterelement einen baulich sehr hohen Aufwand erfordert. Dies führt zu einer sehr kostenintensiven Fertigung des Kraftstoffbehälters. Weiterhin werden im Kraftstoffbehälter vorhandene Kraftstoffdämpfe beim Nachtanken mit einer Zapfpistole ohne Absaugeinrichtung oder mit einem Reservekanister durch den einfließenden Kraftstoff verdrängt und häufig an dem Filterelement vorbei in die Umwelt geführt.

Der Erfindung liegt das Problem zugrunde, einen Kraftstoffbehälter der eingangs genannten Art so weiterzubilden, daß er besonders kostengünstig herstellbar ist und bei dem ein Entweichen von Kraftstoffdämpfen möglichst zuverlässig vermieden wird.

Dieses Problem wird erfindungsgemäß gelöst durch ein sein Volumen entsprechend der Füllung mit Kraftstoff im Kraftstoffbehälter veränderndes Volumenausgleichsteil.

Durch diese Gestaltung wird der Kraftstoffinhalt des erfindungsgemäßen Kraftstoffbehälters durch das Volumenausgleichsteil begrenzt. Das Volumenausgleichsteil befindet sich bei leerem Kraftstoffbehälter an einem Ende seines Bewegungsbereichs und begrenzt das für den Kraftstoff vorgesehene Volumen in Abhängigkeit von räumlichen Gegebenheiten auf ein Minimum. Bei einer Füllung des erfindungsgemäßen Kraftstoffbehälters mit Kraftstoff bewegt sich das Volumenausgleichsteil von der Endstellung weg und vergrößert damit das für den einfließenden Kraftstoff ausfüllbare Volumen im Kraftstoffbehälter. Der erfindungsgemäße Kraftstoffbehälter benötigt keine aufwendige Entlüftungseinrichtung, da das Volumenausgleichsteil bei der Entnahme des Kraftstoffs einen Unterdruck im Kraftstoffbehälter vermeidet. Ein Filterelement zur Vermeidung eines durch Erwärmung hervorgerufenen Überdrucks im Kraftstoffbehälter läßt sich ebenfalls vermeiden, da das Volumenausgleichsteil einen Überdruck verhindert. Der erfindungsgemäße Kraftstoffbehälter läßt sich daher besonders kostengünstig fertigen. Ein Entweichen der Kraftstoffdämpfe aus dem Kraftstoffbehälter wird durch das Volumenausgleichsteil ebenfalls vermieden.

Das Volumenausgleichsteil könnte beispielsweise ein elastischer, in dem Kraftstoffbehälter angeordneter Ball sein. Ein solcher Ball vermag jedoch das von dem Kraftstoff veränderliche Volumen nur unzureichend auszugleichen. Dies führt zu einem Entweichen von Kraftstoffdämpfen. Durch das Volumenausgleichsteil läßt sich gemäß einer vorteilhaften Weiterbildung der Erfindung eine Mischung von Luft und Kraftstoff in dem Kraftstoffbehälter nahezu vollständig vermeiden, wenn das Volumenausgleichsteil zur Trennung von Umgebungsluft und Kraftstoff ausgebildet ist. Beim Nachfüllen des Kraftstoffbehälters werden deshalb keine Kraftstoffdämpfe von dem einfließenden Kraftstoff verdrängt. Daher wird ein Entweichen von Kraftstoffdämpfen in die Umgebung besonders zuverlässig vermieden.

Eine Überfüllung des erfindungsgemäßen Kraftstoffbehälters läßt sich einfach vermeiden, wenn die Wandung ein Stützelement zur Begrenzung des Bewegungsbereichs des Volumenausgleichsteils bei gefülltem Kraftstoffbehälter hat.

Ein Entweichen von Kraftstoffdämpfen läßt sich gemäß einer anderen vorteilhaften Weiterbildung der Erfindung einfach vermeiden, wenn das Volumenausgleichsteil verschiebbar gestaltet und mittels einer reversibel verformbaren Membran gegenüber angrenzenden Bereichen der Wandung abgedichtet ist. Durch diese Gestaltung kann das Volumenausgleichsteil wie ein verschieblicher Kolben innerhalb des Kraftstoffbehälters angeordnet sein. Hierdurch kann der erfindungsgemäße Kraftstoffbehälter für ein Nutzfahrzeug rohrfömig gestaltet sein.

Bei Personenkraftwagen, Booten oder Krafträdern ist die äußere Geometrie der Kraftstoffbehälter meist in Abhängigkeit von angrenzenden Bauteilen verwinkelt gestaltet. Bei einem solchen Kraftstoffbehälter läßt sich gemäß einer anderen vorteilhaften Weiterbildung der Erfindung das Volumenausgleichsteil einfach vorsehen, wenn es entsprechend der Füllung an Kraftstoff reversibel verformbar ist.

Der erfindungsgemäße Kraftstoffbehälter kann beliebig verwinkelt gestaltet sein, wenn das Volumenausgleichsteil blasenförmig gestaltet ist. Das Volumenausgleichsteil kann hier durch eine entsprechende Materialwahl eine Eigenelastizität oder wie eine Tüte keine Eigenelastizität aufweisen.

Bei einem als Satteltank ausgebildeten Kraftstoffbehälter läßt sich ein Entweichen der Kraftstoffdämpfe gemäß einer anderen vorteilhaften Weiterbildung der Erfindung besonders zuverlässig verhindern, wenn die Wandung mehrere Volumenausgleichsteile hat. Vorzugsweise sind die Volumenausgleichsteile hierbei jeweils blasenförmig gestaltet.

Eine Mischung von Luft und Kraftstoff innerhalb des erfindungsgemäßen Kraftstoffbehälters wird zuverlässig vermieden, wenn das blasenförmig gestaltete Volumenausgleichsteil an einem Einfüllstutzen des Kraftstoffbehälters angeschlossen und zur Aufnahme des Kraftstoffs ausgebildet ist. Damit wird eine Mischung von Luft mit dem Kraftstoff besonders zuverlässig vermieden. Hierdurch gelangen nahezu keine Kraftstoffdämpfe aus dem Kraftstoffbehälter.

Der erfindungsgemäße Kraftstoffbehälter kann nahezu beliebige Formen annehmen, wenn das Stützelement gitterartig gestaltet ist.

Häufig kann Kraftstoff durch die Wandung des Kraftstoffbehälters in die Umgebung diffundieren. Zur Verringerung der Diffusion der Kraftstoffdämpfe trägt es gemäß einer anderen vorteilhaften Weiterbildung der Erfindung bei, wenn das Stützelement zur Begrenzung eines Unterdrucks gegenüber dem Volumenausgleichsteil gasdicht gestaltet ist. Der Unterdruck könnte durch den Ansaugkanal einer Brennkraftmaschine oder durch ein Rückschlagventil mit einem Filter erzeugt werden. Durch eine entsprechende Anordnung des Rückschlagventils erneuert sich der Unterdruck ständig bei jeder Entnahme von Kraftstoff aus dem Kraftstoffbehälter.

Vorhandene Kraftstoffbehälter lassen sich gemäß einer anderen vorteilhaften Weiterbildung der Erfindung mit der bewegbaren Wand einfach nachrüsten, wenn das blasenförmig gestaltete Volumenausgleichsteil bei leerem Kraftstoffbehälter mit Luft gefüllt ist und zum Druckausgleich eine Verbindung mit der Umgebung hat. Ein weiterer Vorteil dieser Gestaltung besteht darin, daß sich in dem Kraftstoffbehälter weitere Bauteile wie beispielsweise Saugstrahlpumpen und eine Fördereinrichtung mit besonders geringem baulichen Aufwand anordnen lassen.

Bei einem nicht ausreichenden Diffusionsverhalten des blasenförmig gestalteten Volumenausgleichsteils läßt sich ein Entweichen von Kraftstoffdämpfen durch die Verbindung mit der Umgebung einfach vermeiden, wenn in der Verbindung ein Filterelement angeordnet ist.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: einen erfindungsgemäßen Kraftstoffbehälter im Längsschnitt mit einem blasenförmig gestalteten Volumenausgleichsteil,
- Fig.2: eine weitere Ausführungsform des erfindungsgemäßen Kraftstoffbehälters mit einem gitterartigen Stützelement,
- Fig.3: eine weitere Ausführungsform des erfindungsgemäßen Kraftstoffbehälters mit einer rohrförmigen Wandung,
- Fig.4: eine weitere Ausführungsform des erfindungsgemäßen Kraftstoffbehälters mit zwei mit Luft gefüllten, blasenförmig gestalteten Volumenausgleichsteilen.

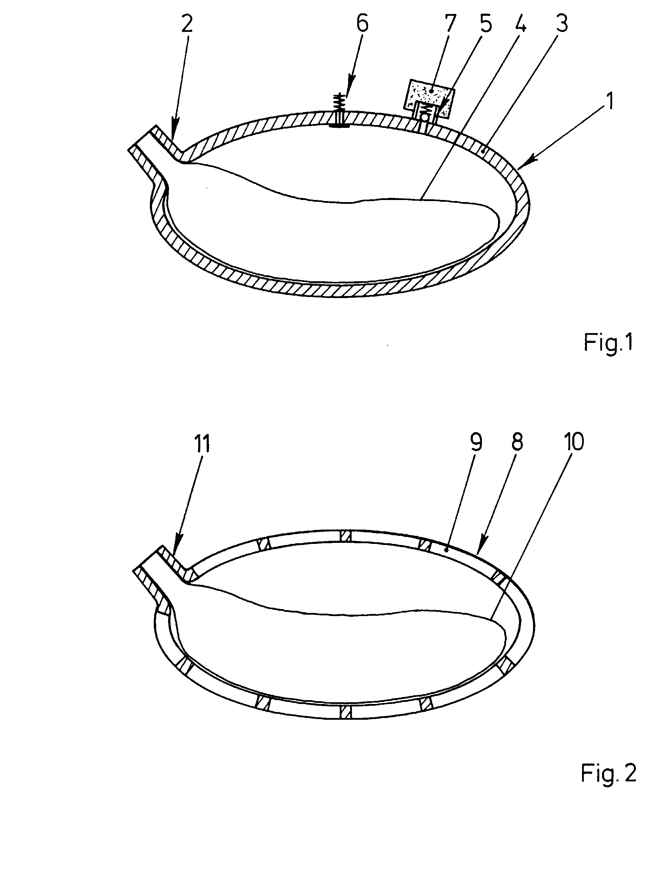

Die Figur 1 zeigt einen erfindungsgemäßen Kraftstoffbehälter mit einer Wandung 1 und einem Einfüllstutzen 2. Die Wandung 1 hat ein Stützelement 3 und ein mit Kraftstoff gefülltes Volumenausgleichsteil 4. Das Volumenausgleichsteil 4 ist blasenförmig gestaltet und kann entsprechend seiner Füllung mit Kraftstoff sein Volumen vergrößern, bis es gegen das Stützelement 3 gelangt, oder sich zusammenziehen, bis es nahezu kein Restvolumen aufweist. Das Stützelement 3 ist abgesehen von einem Rückschlagventil 5 und einem Druckregelventil 6 gasdicht gestaltet. Zwischen dem Stützelement 3 und dem Volumenausgleichsteil 4 befindet sich über das Druckregelventil 6 aus der Umgebung angesaugte Luft. Das Rückschlagventil 5 ermöglicht ein Entweichen der Luft aus dem Kraftstoffbehälter beim Nachfüllen von Kraftstoff. Das Rückschlagventil 5 kann mit einem Filterelement 7 zur Zurückhaltung von durch das Volumenausgleichsteil 4 diffundierten Kraftstoffdämpfen versehen sein. Das Filterelement 7 kann hierzu beispielsweise Aktivkohle enthalten.

Innerhalb des erfindungsgemäßen Kraftstoffbehälters trennt das Volumenausgleichsteil 4 Luft von flüssigem Kraftstoff und verhindert damit eine Entstehung von Kraftstoffdämpfen. Beim Nachfüllen des Kraftstoffbehälters werden daher keine Kraftstoffdämpfe verdrängt. Das Volumenausgleichsteil 4 kann beispielsweise aus einem gummielastischen Material gefertigt sein und eine Eigenelastizität aufweisen oder tütenförmig ohne Eigenelastizität gestaltet sein.

Die Figur 2 zeigt eine weitere Ausführungsform des erfindungsgemäßen Kraftstoffbehälters, bei dem eine Wandung 8 ein von einem gitterartigen Stützelement 9 gehaltenes Volumenausgleichsteil 10 hat. Das Volumenausgleichsteil 10 ist mit einem Einfüllstutzen 11 verbunden und nimmt wie das in Figur 1 dargestellte Volumenausgleichsteil 4 den Kraftstoff auf. Durch die gitterartige Gestaltung des Stützelements 9 benötigt die Wandung 8 keine Ventile zum Druckausgleich mit der Umgebung.

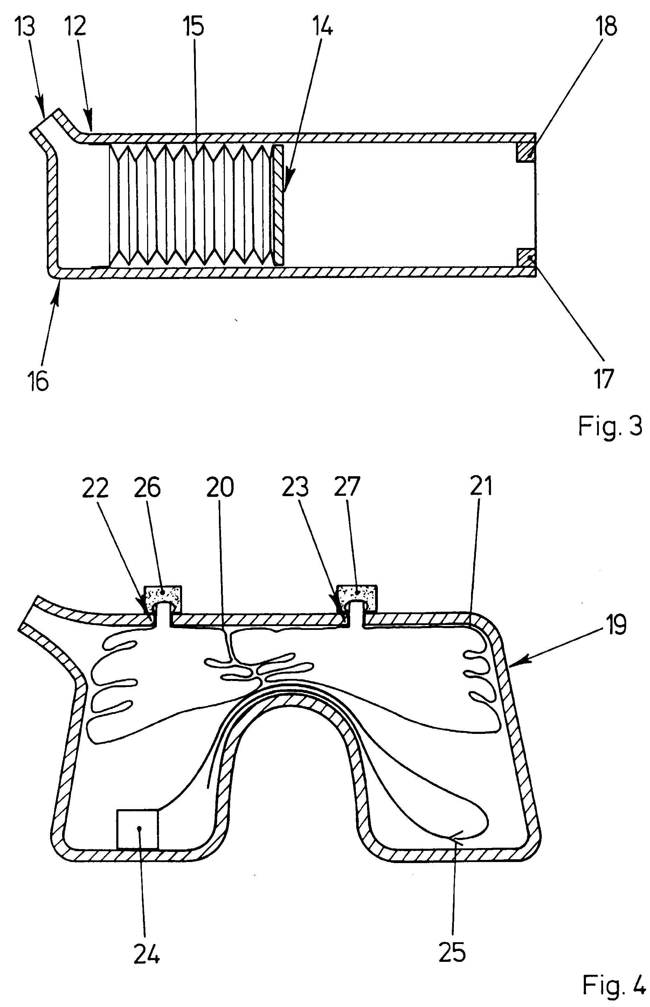

Die Figur 3 zeigt einen Kraftstoffbehälter beispielsweise für ein Nutzfahrzeug mit einer rohrförmig gestalteten Wandung 12. Der Kraftstoffbehälter hat an einem Ende einen Einfüllstutzen 13 und ist zu einer Seite hin offen gestaltet. In dem Kraftstoffbehälter ist ein Volumenausgleichsteil 14 verschiebbar angeordnet, welches mit einer reversibel verformbaren Membran 15 gegenüber angrenzenden Bereichen der Wandung 12 abgedichtet ist. Damit hat der Kraftstoffbehälter einen feststehenden Teilbereich 16 zur Befestigung beispielsweise eines nicht dargestellten Kraftstoffilters. Der Bewegungsbereich des Volumenausgleichsteils 14 wird von einem an dem offenen Ende des Kraftstoffbehälters angeordneten Stützelement 17, 18 begrenzt.

Die Figur 4 zeigt einen erfindungsgemäßen, als Satteltank ausgebildeten Kraftstoffbehälter mit zwei innerhalb dessen feststehenden Wandung 19 angeordneten Volumenausgleichsteilen 20, 21. Die Volumenausgleichsteile 20, 21 sind jeweils blasenförmig gestaltet und an Öffnungen 22, 23 von feststehenden Bereichen der Wandung 19 angeordnet. Bei einer Entnahme von Kraftstoff aus dem Kraftstoffbehälter kann durch die Öffnungen 22, 23 Luft in die Volumenausgleichsteile 20, 21 einströmen. Im Gegensatz zu dem blasenförmigen Volumenausgleichsteil 4 aus Figur 1 sind diese Volumenausgleichsteile 20, 21 mit Luft aus der Umgebung gefüllt. Der Kraftstoff befindet sich zwischen den Volumenausgleichsteilen 20, 21 und dem feststehenden Bereichen der Wandung 19. In feststehenden Bereichen der Wandung 19 sind eine Fördereinheit 24 und eine Saugstrahlpumpe 25 befestigt. Im Bereich der Öffnungen 22, 23 ist jeweils ein Filterelement 26, 27 zur Zurückhaltung von durch die Volumenausgleichsteile 20, 21 diffundierten Kraftstoffdämpfen angeordnet.

## Patentansprüche

1. Kraftstoffbehälter mit einer Wandung zur Begrenzung seines Kraftstoffinhalts, **gekennzeichnet durch** ein sein Volumen entsprechend der Füllung mit Kraftstoff im Kraftstoffbehälter veränderndes Volumenausgleichsteil (4, 10, 14, 20, 21).

2. Kraftstoffbehälter nach Anspruch 1, **dadurch gekennzeichnet**, daß das Volumenausgleichsteil (4, 10, 14, 20, 21) zur Trennung von Umgebungsluft und Kraftstoff ausgebildet ist.

3. Kraftstoffbehälter nach Anspruch 1 oder 2, **dadurch gekennzeichnet**, daß die Wandung (1, 8, 12) ein Stützelement (3, 9, 18) zur Begrenzung des Bewegungsbereichs des Volumenausgleichsteils (4, 10, 14) bei gefülltem Kraftstoffbehälter hat.

4. Kraftstoffbehälter nach zumindest einem der vorhergehenden Ansprüche, **dadurch gekennzeichnet**, daß das Volumenausgleichsteil (14) verschiebbar gestaltet und mittels einer reversibel verformbaren Membran (15) gegenüber angrenzenden Bereichen der Wandung (12) abgedichtet ist.

5. Kraftstoffbehälter nach zumindest einem der vorhergehenden Ansprüche, **dadurch gekennzeichnet**, daß das Volumenausgleichsteil (4, 10, 20, 21, Membran 15) entsprechend der Füllung an Kraftstoff reversibel verformbar ist.

6. Kraftstoffbehälter nach zumindest einem der vorhergehenden Ansprüche, **dadurch gekennzeichnet**, daß das Volumenausgleichsteil (4, 10, 20, 21) blasenförmig gestaltet ist.

7. Kraftstoffbehälter nach zumindest einem der vorhergehenden Ansprüche, **dadurch gekennzeichnet**, daß in dem Kraftstoffbehälter mehrere Volumenausgleichsteile (20, 21) angeordnet sind.

8. Kraftstoffbehälter nach zumindest einem der vorhergehenden Ansprüche, **dadurch gekennzeichnet**, daß das blasenförmig gestaltete Volumenausgleichsteil (4, 10) an einem Einfüllstutzen (2, 11) des Kraftstoffbehälters angeschlossen und zur Aufnahme des Kraftstoffs ausgebildet ist.

9. Kraftstoffbehälter nach zumindest einem der vorhergehenden Ansprüche, **dadurch gekennzeichnet**, daß das Stützelement (9) gitterartig gestaltet ist.

10. Kraftstoffbehälter nach zumindest einem der vorhergehenden Ansprüche, **dadurch gekennzeichnet**, daß das Stützelement (3) zur Begrenzung eines Unterdrucks gegenüber dem Volumenausgleichsteil (10) gasdicht gestaltet ist.

11. Kraftstoffbehälter nach zumindest einem der vorhergehenden Ansprüche, **dadurch gekennzeichnet**, daß das blasenförmig gestaltete Volumenausgleichsteil (20, 21) bei leerem Kraftstoffbehälter mit Luft gefüllt ist und zum Druckausgleich eine Verbindung (Öffnung 22, 23) mit der Umgebung hat.

12. Kraftstoffbehälter nach zumindest einem der vorhergehenden Ansprüche, **dadurch gekennzeichnet**, daß in der Verbindung (Öffnung 22, 23) ein Filterelement (26, 27) angeordnet ist.
